# EUROPÄISCHE PATENTANMELDUNG

(11) **EP 4 834 764 A1**
(43) Veröffentlichungstag der Anmeldung: **04.11.2026**
(21) Anmeldenummer: 26173242.4
(22) Anmeldetag: 20.04.2026
(51) Int. Cl.: B64D 11/04, B64D 11/00

(54) **FALTBARER WARENAUTOMAT**

(30) Priorität: 28.04.2025 DE 102025116240
(71) Anmelder: Elbe Flugzeugwerke GmbH, 01109 Dresden (DE)
(72) Erfinder: Kehrer, Jens, 01109 Dresden (DE)
(74) Vertreter: LKGLOBAL Partnerschaftsgesellschaft mbB

(57) **Zusammenfassung**

Die vorliegende Erfindung befasst sich mit einem Warenausgabegerät.

Um ein verbessertes Warenausgabegerät bereitzustellen, dass vorhandenen Raum effizienter ausnutzt, weist das Warenausgabegerät (10) für eine Flugzeugkabine, ein erstes Warenfachkammersegment (12) mit einer primären Warenfachfläche (14), mindestens ein zweites Warenfachkammersegment (16) mit einer sekundären Warenfachfläche (18) und eine erste Verbindungsanordnung (20) auf. Das erste Warenfachkammersegment und das mindestens zweite Warenfachkammersegment weisen jeweils mindestens ein Warenfach (22a, 22b) zum Lagern von Waren auf. Das mindestens zweite Warenfachkammersegment und das erste Warenfachkammersegment sind beweglich zueinander in der ersten Verbindungsanordnung gelagert. Die erste Verbindungsanordnung ist ausgestaltet, um die primäre Warenfachfläche mit der sekundären Warenfachfläche in einem verstauten Zustand (24a) zu überlagern und in einem ausgeklappten Zustand (24b) die primäre Warenfachfläche mittels der sekundären Warenfachfläche zu einer kabineninnenraumexponierten Gesamtwarenfachfläche (26) zu vergrößern.

## Beschreibung

### GEBIET DER ERFINDUNG

Die vorliegende Erfindung befasst sich mit einem selbstbedienbaren Warenlagerungs- und verteilungssystem, insbesondere befasst sich die Erfindung mit einem Warenausgabegerät, einer Flugzeugkabine, einem Flugzeug und einem Verfahren zum Bereitstellen eines Warenausgabegerätes.

### HINTERGRUND DER ERFINDUNG

An Bord von Flugzeugen kann ein Bedarf vorhanden sein, Waren an Passagiere auszuteilen. Zugang zu diesen Waren kann den Passagieren durch Flugzeugpersonal beschafft werden. Durch Passagiere bedienbare Warenverteilungssysteme können dabei in Flugzeugkabinen vorgesehen werden, um Flugzeugpersonal zu unterstützen. Herkömmlichen Warenverteilungssystemen kann es jedoch an einer Kompatibilität mit der Flugzeugkabine mangeln.

### ZUSAMMENFASSUNG DER ERFINDUNG

Eine Aufgabe der vorliegenden Erfindung besteht daher darin, ein verbessertes Warenausgabegerät bereitzustellen, dass vorhandenen Raum effizienter ausnutzt.

Diese Aufgabe wird durch den Gegenstand der unabhängigen Ansprüche gelöst. Weitere Beispiele sind in den abhängigen Ansprüchen angegeben. Die im folgenden beschriebenen Aspekte gelten auch für die Flugzeugkabine, das Flugzeug und das Verfahren zum Bereitstellen des Warenausgabegerätes.

Gemäß der Erfindung ist ein Warenausgabegerät für eine Flugzeugkabine, bereitgestellt. Das Warenausgabegerät weist ein erstes Warenfachkammersegment mit einer primären Warenfachfläche, mindestens ein zweites Warenfachkammersegment mit einer sekundären Warenfachfläche und eine erste Verbindungsanordnung auf. Das erste Warenfachkammersegment und das mindestens zweite Warenfachkammersegment weisen jeweils mindestens ein Warenfach zum Lagern von Waren auf. Das mindestens zweite Warenfachkammersegment und das erste Warenfachkammersegment sind beweglich zueinander in der ersten Verbindungsanordnung gelagert. Die erste Verbindungsanordnung ist ausgestaltet, um die primäre Warenfachfläche mit der sekundären Warenfachfläche in einem verstauten Zustand zu überlagern und in einem ausgeklappten Zustand die primäre Warenfachfläche mittels der sekundären Warenfachfläche zu einer kabineninnenraumexponierten Gesamtwarenfachfläche zu vergrößern.

Als technischer Effekt sind durch den aufgeklappten Zustand des Warenausgabegerätes die primären und sekundären Warenfachflächen auf einmal in ihrer Gesamtheit erfassbar. Als technischer Effekt sind dadurch die Inhalte der Warenfächer, beziehungsweise die Waren beider Warenfachkammersegmente in ihrer Gesamtheit erfassbar. Als technischer Effekt sind dadurch die Inhalte des mindestens einen Warenfachs, beziehungsweise die Waren beider Warenfachkammersegmente in ihrer Gesamtheit zugänglich für den Benutzer. Als technischer Effekt ist dadurch der Inhalt beider, primären und sekundären Warenfachflächen durch Lichtstrahlen erfassbar. Als technischer Effekt wird durch das Erfassen der Gesamtheit der Warenfachflächen ein Selektieren und Anwählen einzelner Warenfachfächer zum Selektieren von einzelnen Waren aus den Warenfächern beschleunigt. Als technischer Effekt ist die Oberfläche des Warenausgabegerätes im verstauten Zustand im Gegensatz zum ausgeklappten Zustand kleiner. Als ein Vorteil ist ein platzsparenderes und flexibleres Warenausgabegerät bereitgestellt. Als ein Vorteil wird das beschränkte Raumangebot in einer Flugzeugkabine effizienter genutzt. Als ein Vorteil wird das beschränkte Raumangebot in einer Flugzeugkabine nur temporär ausgenutzt. Als ein Vorteil wird das beschränkte Raumangebot in einer Flugzeugkabine multifunktional genutzt als Kabinengehweg oder Platz für das entfaltete Warenausgabegerät. Als ein Vorteil sind Waren an Bord eines Flugzeugs ständig verfügbar unabhängig vom Flugpersonal, was der Bequemlichkeit und der Zeitersparnis dient. Als ein Vorteil ist eine Kostenersparnis durch den Entfall der herkömmlichen Galleyelemente zur Warenausgabe bereitgestellt. Als ein Vorteil ist ein höherer Kundennutzen für den Passagier bereitgestellt. Als ein Vorteil wird weniger menschliche Interaktion benötigt. Als ein weiterer Vorteil werden Personalkosten niedrig gehalten. Als ein Vorteil ist mehr Hygiene gewährleistet. Als ein Vorteil kann das Warenausgabegerät in Frachtflugzeugen als Tresor für besonders wertvolle beziehungsweise besonders zu schützende Fracht eingesetzt werden. Als ein weiterer Vorteil ist dadurch eine höhere Sicherheit gegen den Zugriff auf sensible Fracht gewährleistet.

Gemäß einem Beispiel ist ferner mindestens ein drittes Warenfachkammersegment mit einer tertiären Warenfachfläche umfasst, aufweisend mindestens ein Warenfach zum Lagern von Waren. Das mindestens dritte Warenfachkammersegment und das erste Warenfachkammersegment sind beweglich zueinander in einer zweiten Verbindungsanordnung gelagert. Die zweite Verbindungsanordnung ist ausgestaltet, um die tertiäre Warenfachfläche mit der primären Warenfachfläche und mit der sekundären Warenfachfläche in einem verstauten Zustand zu überlagern und in einem ausgeklappten Zustand die primäre Warenfachfläche mittels der tertiären Warenfachfläche zu der kabineninnenraumexponierten Gesamtwarenfachfläche zusätzlich zu vergrößern.

Gemäß einem Beispiel ist die zweite Verbindungsanordnung ausgestaltet, um das mindestens dritte Warenfachkammersegment im Bezug auf das erste Warenfachkammersegment um eine zweite gemeinsame Drehachse zu bewegen. Die zweite gemeinsame Drehachse ist beabstandet von einer der primären, sekundären und tertiären Warenfachflächen, um das zweite Warenfachkammersegment zwischen dem ersten Warenfachkammersegment und dem tertiären Warenfachkammersegment im verstauten Zustand einzufalten.

Gemäß einem Beispiel ist ferner eine Arretierungsanordnung zum Fixieren einer Orientierung mindestens des zweiten Warenfachkammersegments relativ zum ersten Warenfachkammersegment im verstauten oder ausgeklappten Zustand umfasst.

Gemäß einem Beispiel ist die Arretierungsanordnung ausgestaltet, um mindestens das zweite Warenfachkammersegment relativ zum ersten Warenfachkammersegment und einem Kabinenboden anzuheben, um das zweite Warenfachkammersegment um die erste gemeinsame Drehachse zu bewegen. Die Arretierungsanordnung ist ferner ausgestaltet, um das zweite Warenfachkammersegment relativ zum ersten Warenfachkammersegment abzusenken, um das zweite Warenfachkammersegment im ausgeklappten Zustand am Kabinenboden zu fixieren.

Gemäß einem Beispiel umfasst eines der ersten, zweiten und mindestens dritten Warenfachkammersegmente 30 eine Trennwand.

Gemäß der Erfindung ist eine Flugzeugkabine bereitgestellt. Die Flugzeugkabine weist einen Kabinenraum, Ausgangsbereichsareale, die als mindestens eines von Notausgangsbereichsarealen, Vorderausgangsbereichsarealen und Hinterausgangsbereichsarealen ausgestaltet sind und mindestens ein Warenausgabegerät gemäß einem der vorhergehenden Beispiele auf. Die Ausgangsbereichsareale sind zum Betreten und Verlassen des Kabinenraums angeordnet. Das Warenausgabegerät ist an mindestens einem der Ausgangsbereichsareale im verstauten Zustand angeordnet. Das Warenausgabegerät ragt im ausgeklappten Zustand mit einer kabineninnenraumexponierten Gesamtwarenfachfläche in ein Ausgangsbereichsareal hinein.

Als Vorteil ist eine Kabine mit effizienterer Raumnutzung bereitgestellt.

Gemäß der Erfindung ist ein Flugzeug bereitgestellt. Das Flugzeug weist eine Rumpfstruktur mit Ausgangsöffnungen und eine Flugzeugkabine gemäß dem vorherigen Beispiel auf. Die Rumpfstruktur umfasst die Flugzeugkabine und die Ausgangsöffnungen befinden sich an Ausgangsbereichsarealen der Flugzeugkabine.

Als ein Vorteil ist ein Flugzeug mit effizienterer Raumausnutzung bereitgestellt.

Gemäß der Erfindung ist ein Verfahren zum Bereitstellen eines Warenausgabegerätes für eine Flugzeugkabine, das die folgenden Schritte aufweist:
a) Bereitstellen eines ersten Warenfachkammersegments mit einer primären Warenfachfläche,
b) Bereitstellen mindestens eines zweiten Warenfachkammersegments mit einer sekundären Warenfachfläche,
c) Bereitstellen einer ersten Verbindungsanordnung, wobei das erste Warenfachkammersegment und das mindestens zweite Warenfachkammersegment jeweils mindestens ein Warenfach zum Lagern von Waren aufweisen, wobei das mindestens zweite Warenfachkammersegment und das erste Warenfachkammersegment beweglich zueinander in der ersten Verbindungsanordnung gelagert sind und wobei die erste Verbindungsanordnung ausgestaltet ist, um die primäre Warenfachfläche mit der sekundären Warenfachfläche in einem verstauten Zustand zu überlagern und in einem ausgeklappten Zustand die primäre Warenfachfläche mittels der sekundären Warenfachfläche zu einer kabineninnenraumexponierten Gesamtwarenfachfläche zu vergrößern.

Gemäß einem Aspekt der Erfindung besteht in einer Flugzeugkabine eingeschränktes Platzangebot. Daher wird versucht den bestehenden Platz in der Flugzeugkabine effizient zu nutzen. Wenn ein Full-Service Restaurant während des Fluges nicht verfügbar ist, entsteht ein Bedarf für Selbstbedienungs-Catering durch den Passagier. Es wird ein während des Fluges aufklappbarer Selbstbedienungsschrank mit vielen Produkteinschüben und mit elektronisch ansteuerbaren Warenfächern beschrieben. Der Selbstbedienungsschrank ähnelt im weitesten Sinn einem Apothekerschrank oder einer Paketpickup-Station.

Gemäß einem Aspekt der Erfindung ist ein Bestandteil des Warenausgabegerätes ein aus drei Einzelelementen aufklappbarer Schrank mit elektronisch ,fern-, entriegelbaren Türen zur Entnahme des gekauften Produkts, beziehungsweise der Waren. Über einen Mechanismus, zum Beispiel einen Hebe- und Absenkmechanismus und Bewegungskinematik, beispielsweise 4-Gelenk Getriebe, wird der Schrank während des Fluges aufgeklappt und versperrt den zu dieser Zeit ungenutzten Raum vor den Not-, und Ausstiegstüren des Flugzeugs. Vor der Landung wird der Schrank wieder zusammengeklappt und der Platz vor den Ausstiegstüren wird nicht mehr versperrt. Die Bedienung und Bezahlung können dabei über eine App auf einem mobilen Endgerät oder bei Kundenwunsch über ein gewöhnliches Display mit Touchscreen direkt am Schrank erfolgen.

Gemäß einem Aspekt der Erfindung ist ein faltbarer Warenautomat vorgesehen.

Es sei darauf hingewiesen, dass die Merkmale der Ausführungsbeispiele der Flugzeugkabine, des Flugzeugs und des Verfahrens zum Bereitstellen des Warenausgabegerätes auch für Ausführungsformen der Flugzeugkabine, des Flugzeugs und des Verfahrens zum Bereitstellen des Warenausgabegerätes gelten und umgekehrt. Außerdem können auch diejenigen Merkmale frei miteinander kombiniert werden, bei denen dies nicht explizit erwähnt ist.

### KURZE BESCHREIBUNG DER ZEICHNUNGEN

Nachfolgend wird anhand der beigefügten Zeichnungen näher auf Ausführungsbeispiele der Erfindung eingegangen.
- **Fig. 1**: zeigt schematisch ein Beispiel eines Warenausgabegerätes im verstauten und ausgeklappten Zustand, der jeweils links und rechts gezeigt ist.
- **Fig. 2**: zeigt schematisch ein Beispiel eines Warenausgabegerätes im ausgeklappten Zustand.
- **Fig. 3**: zeigt schematisch in einer Draufsicht, senkrecht zur zweiten Drehachse, ein Beispiel eines Warenausgabegerätes im verstauten und ausgeklappten Zustand, der jeweils links und rechts gezeigt ist.
- **Fig. 4**: zeigt schematisch ein Beispiel einer Flugzeugkabine.
- **Fig. 5**: zeigt schematisch ein Beispiel eines Flugzeugs.
- **Fig. 6**: zeigt grundlegende Schritte eines Beispiels eines Verfahrens zum Bereitstellen des Warenausgabegerätes für eine Flugzeugkabine.

### DETAILLIERTE BESCHREIBUNG VON AUSFÜHRUNGSFORMEN

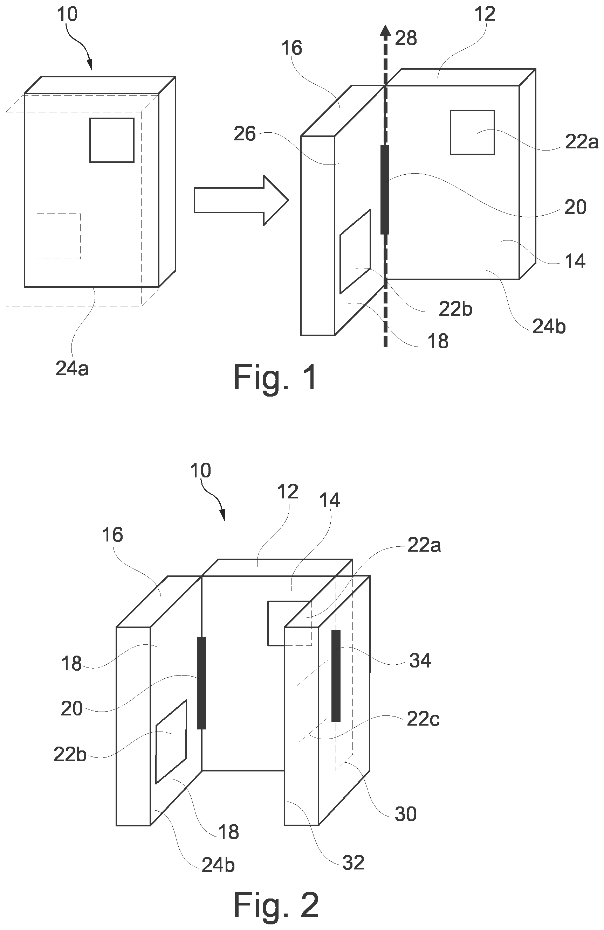

Fig. 1 zeigt schematisch ein Beispiel eines Warenausgabegerätes 10 im verstauten 24a und ausgeklappten Zustand 24b, der jeweils links und rechts gezeigt ist. Das Warenausgabegerät 10 für eine Flugzeugkabine, die in Fig. 1 nicht gezeigt ist, weist ein erstes Warenfachkammersegment 12 mit einer primären Warenfachfläche 14, mindestens ein zweites Warenfachkammersegment 16 mit einer sekundären Warenfachfläche 18 und eine erste Verbindungsanordnung 20 auf. Das erste Warenfachkammersegment 12 und das mindestens zweite Warenfachkammersegment 16 weisen jeweils mindestens ein Warenfach 22a, 22b zum Lagern von Waren auf. Das mindestens zweite Warenfachkammersegment 16 und das erste Warenfachkammersegment 12 sind beweglich zueinander in der ersten Verbindungsanordnung 20 gelagert und die erste Verbindungsanordnung 20 ist ausgestaltet, um die primäre Warenfachfläche 14 mit der sekundären Warenfachfläche 18 in einem verstauten Zustand 24a zu überlagern und in einem ausgeklappten Zustand 24b die primäre Warenfachfläche 14 mittels der sekundären Warenfachfläche 18 zu einer kabineninnenraumexponierten Gesamtwarenfachfläche 26 zu vergrößern.

Das Warenausgabegerät kann auch als vending machine, Verkaufsautomat, Warenautomat, Snackautomat, Servierautomat, Selbstbedienungsschrank, Schrank oder Automat bezeichnet werden.

Das "Warenausgabegerät" bezieht sich auf ein Gerät, das Waren oder Dienstleistungen gegen Bezahlung ausgibt. Diese Automaten sind so konzipiert, dass sie rund um die Uhr verfügbar sind und den Benutzern eine bequeme Möglichkeit bieten, Produkte zu erwerben, ohne auf zusätzliche Servicedienstleitungen angewiesen zu sein. Die Funktionsweise ist wie folgt beschrieben: Der Benutzer wählt ein gewünschtes Produkt aus und bezahlt, sei es mit Münzen, Banknoten, Karte oder auch per Smartphone. Anschließend gibt der Automat das ausgewählte Produkt aus. Es kann eine Vielzahl von Warenausgabeautomaten vorgesehen sein, die unterschiedliche Bedürfnisse bedienen. Es können gekühlte oder heiße Getränke, Süßigkeiten, Chips und ganze Mahlzeiten ausgeben werden, aber auch andere Verbrauchsgüter.

Der Begriff "Flugzeugkabine" bezieht sich auf den Innenraum des Rumpfwerks eines Flugzeuges, in dem sich die Passagiere aufhalten und transportiert werden und die das Warenausgabegerät bedienen, um sich Zugang zu den dort gelagerten Waren zu beschaffen.

Die Flugzeugkabine kann auch als Kabine, Kabineninnenraum, Kabinenraum oder Innenraum bezeichnet werden.

Das Warenfachkammersegment kann auch als Warenfachkammermodul, Warenfachkammer, Stauschrank, Apothekerschrank, Schrank oder Warenkammer bezeichnet werden.

Der Begriff "Warenfachkammersegment" bezieht sich auf einen abgegrenzten Bereich innerhalb des Warenlagers des Warenausgabegerätes 10, der aus mehreren Fächern aber zu mindestens einem Fach besteht und zur Aufbewahrung einer bestimmten Art oder Gruppe von Waren dient.

In einem Beispiel ist das Warenfachkammersegment als ein Quader oder Kasten ausgestaltet, wie in Fig. 1 gezeigt, mit einer Warenfachfläche, welche weiter unten beschrieben wird und einer gegenüberliegenden, rückseitigen und kabineninnenraumabgewandten Fläche. Das Warenfachkammersegment weist auch rechte und linke Seitenflächen und obere und untere Seitenflächen auf, die an der Begrenzung, beziehungsweise Grenze der Warenfachfläche münden und die Warenfachfläche mit der vorhergenannten rückseitigen Fläche verbinden. Die Seitenflächen definieren einen Abstand zwischen der Warenfachfläche und der rückseitigen Fläche, welche auch ein Volumen des Warenfachkammersegments und der davon umfassten Warenfächer bestimmt, wie in Fig. 1 gezeigt.

In einem Beispiel ist jedes Warenfachkammersegment als Schrankteil gestaltet, wobei die Schrankfächer oder Warenfächer nur über die primäre Warenfachfläche 14 oder sekundäre Warenfachfläche 18 zugänglich sind, wie in Fig. 1 gezeigt.

In einem Beispiel dient die gegenüberliegende, rückseitige und kabineninnenraumabgewandte Fläche der Verhinderung des Zugangs zu den Warenfächern, wie in Fig. 1 gezeigt.

In einem Beispiel ist das Warenfachkammersegment mit gekrümmten Flächen versehen, um es besser an den Kabineninnenraum anzufügen.

In einem Beispiel ist das Warenfachkammersegment als 2D Matrize bestehend aus einer Vielzahl von Warenfächern gestaltet, wie in Fig. 1 gezeigt.

Der Begriff "Warenfachfläche" bezieht sich auf die kabineninnenraumexponierte Fläche des Warenfachkammersegment von der aus auf das mindestens eine Warenfach 22a, 22b des Warenfachkammersegmentes zugegriffen werden kann oder durch welches die einzelnen Warenfächer 22a, 22b zum Entnehmen oder Beschicken der Waren von dem Kabineninnenraum erreichbar sind. Ferner bezieht sich die Warenfachfläche auf eine Hauptfläche des Warenfachkammersegments von der aus die Volumina oder Inhalte des mindestens einen Warenfachs optisch erfassbar sind, wie in Fig. 1 gezeigt. Das mindestens eine Warenfach 22a, 22b liegt hinter der Warenfachfläche, beziehungsweise ist von ihr bedeckt und liegt vor der gegenüberliegenden, rückseitigen und kabineninnenraumabgewandten Fläche, wie in Fig. 1 gezeigt.

In einem Beispiel ist die Warenfachfläche transparent, beziehungsweise durchsichtig, sodass der Inhalt des mindestens einen Warenfachs mittels Lichtstrahlen erfassbar ist.

In einem Beispiel ist die Warenfachfläche nicht transparent aber mit einer Markierung versehen, die auf den Inhalt des dahinterliegenden mindestens einen Warenfachs hinweist, nicht in Fig. 1 gezeigt.

In einem Beispiel weist die Warenfachfläche Abdeckungen oder Törchen auf, die betätigt werden können, um auf Waren in dem dahinterliegenden mindestens einem Warenfach 22a, 22b zugreifen zu können.

In einem Beispiel sind die Törchen aus transparentem Material.

Der Begriff "Verbindungsanordnung" bezieht sich auf eine Vorrichtung mittels der die Warenfachkammersegmente in ihrer Orientierung zueinander verändert werden können, sodass beide Warenfachkammersegmente an der Verbindungsanordnung als Bezugspunkt verbunden oder gekoppelt bleiben. Die Orientierungsänderung kann sich beispielsweise durch eine Änderung eines eingeschlossenen Winkels zwischen den Warenfachkammersegmenten an der Verbindungsanordnung äußern, wobei der Winkel 0 bis etwa 360° betragen kann.

Der Begriff "Warenfach" bezieht sich auf mindestens eine abgetrennte Zelle innerhalb des Warenfachkammersegments, dass dem Halten und Aufbewahren einer Vielzahl von Produkten oder Waren dient.

Das mindestens eine Warenfach 22a, 22b kann auch als Warenfach, Fach, Zelle, Kompartment, Warenfächer oder Fächer bezeichnet werden.

Das mindestens eine Warenfach 22a, 22b bezieht sich auf die Warenfächer des ersten, zweiten und dritten Warenfachkammersegmentes 30
In einem Beispiel umfasst das Warenfachkammersegment eine Vielzahl von Warenfächern.

In einem Beispiel ist das Warenfachkammersegmente aus einer Matrize einer Vielzahl von Warenfächern aufgebaut.

In einem Beispiel ist das Warenfach 22a, 22b auf die Größe der dort gelagerten Waren angepasst, sodass das Warenfach 22a, 22b die Waren umfasst und festhält, um das Herumrutschen und Bewegen der Waren durch Flugturbulenzen zu vermeiden, die nicht in Fig. 1 gezeigt sind.

In einem Beispiel umfasst das Warenfach 22a, 22b Festhalteanordnungen oder -mechanismen, welche die Waren im Warenfach 22a, 22b gegen das ungesteuerte Herumbewegen im Warenausgabegerät sichern, die in Fig. 1 gezeigt sind.

In einem Beispiel ist das Warenfach 22a, 22b isoliert, beheizbar, gekühlt oder sonst wie temperaturreguliert, nicht in Fig. 1 gezeigt.

In einem Beispiel umfasst das Warenfach 22a, 22b eine Nahrungszubereitungsvorrichtung, nicht in Fig. 1 gezeigt.

In einem Beispiel sind die Warenfächer in Lagerwarenfächer und ein Verteilerwarenfach eingeteilt. Durch einen Warenverteiler werden Waren aus den Lagerwarenfächern dem Verteilerwarenfach zugeführt, auf welches der Benutzer des Warenausgabegerätes 10 Zugriff hat.

In einem Beispiel ist ein Warenverteiler oder Warenausteiler an dem jeweiligen Warenfach 22a, 22b vorgesehen, der nicht in Fig. 1 gezeigt ist.

In einem Beispiel ist der Warenverteiler aktiv oder inaktiv.

In einem Beispiel ist ein inaktiver Warenverteiler vorgesehen, der beispielsweise als aufschließbares Törchen oder Klappe in der Warenfachfläche ausgeführt ist. Das Törchen, das nicht in Fig. 1 gezeigt ist, erlaubt dem Benutzer des Warenausgabegerätes 10 Zugriff durch die Warenfachfläche in ein Warenfach 22a, 22b oder ein zentrales Warenverteilungsfach.

In einem Beispiel ist ein aktiver Warenverteiler vorgesehen, der beispielsweise als Spiralmechanismus, Trommelmechanismus, Robotorarm an dem jeweiligen Warenfach 22a, 22b vorgesehen ist, der nicht in Fig. 1 gezeigt ist.

In einem Beispiel sichert der Warenverteiler die Waren gegenüber Flugturbulenzen und unbeabsichtigte Bewegungen durch Flugturbulenzen.

In einem Beispiel wird der Warenverteiler durch ein Signal eines Bezahlmechanismus aktiviert.

In einem Beispiel wird das Signal des Bezahlmechanismus durch einen Zahlungsvorgang des Kundens ausgelöst, der über Bargeld, eine Bankkarte oder einen Onlinekauf oder eine Bezahlungsapp ausgeführt wurde, was nicht in Fig. 1 gezeigt ist.

In einem Beispiel sind die Warenfächer unterschiedlich ausgestaltet in ihrer geometrischen Form, ihrem Volumen oder der Dicke ihrer Warenfachwände, was nicht in Fig. 1 gezeigt ist.

Der Begriff "beweglich zueinander" bezieht sich auch darauf, dass sich das erste Warenfachkammersegment 12 und das mindestens zweite Warenfachkammersegment 16 in einem Zustand befinden in der der von ihnen an der Verbindungsanordnung eingeschlossene Winkel durch eine Bewegungskinematik änderbar ist. Der Begriff bezieht sich nicht darauf, dass die Warenfachkammersegmente locker in der ersten Verbindungsanordnung 20 gehalten werden.

In einem Beispiel sind das erstes Warenfachkammersegment 12 und das zweite Warenfachkammersegment 16 jeweils fest mit der ersten Verbindungsanordnung 20 verbunden, wie in Fig. 1 gezeigt.

In einem Beispiel sind das erstes Warenfachkammersegment 12 und das zweite Warenfachkammersegment 16 jeweils fest mittels der ersten Verbindungsanordnung 20 verbunden, aber beweglich zueinander, wie in Fig. 1 gezeigt ist.

Der Begriff "verstauter Zustand" bezieht sich auf eine Orientierung des erste Warenfachkammersegment 12 und des mindestens zweiten Warenfachkammersegments 16, bei dem diese die kleinste Ausdehnung in der Flugzeugkabine einnehmen.

In einem Beispiel ist die Ausdehnung der kabineninnenraumexponierten Gesamtwarenfachfläche 26 des Warenausgabegerätes 10 größer im ausgeklappten Zustand 24b als im verstauten Zustand 24a und ragt dabei in Volumina der Flugzeugkabine, die nicht in Fig. 1 gezeigt ist, herein, die ein Ausgangsareal oder ein Gangareal, ein Küchenareal, ein Cockpitareal oder ein sonstiges Areal der Flugzeugkabine darstellen. Dadurch ist die Nutzung dieser Bereiche durch die Nutzung des Warenausgabegerät im ausgeklappten Zustand 24b temporär blockiert.

In einem Beispiel ist das durch die kinematische Bewegung zum ausgeklappten Zustand 24b des ersten und mindestens zweiten Warenfachkammersegments 16 umschriebene Volumen größer als das Volumen des Warenausgabegerätes 10 im verstauten Zustand 24a. Das umschriebene Volumen ist dabei Volumen in der Flugzeugkabine welches für den Betrieb der Flugzeugkabine vorgesehen ist, wie ein Ausgangsareal oder ein Gangareal, ein Küchenareal, ein Cockpitzugangsareal oder ein sonstiges Areal der Flugzeugkabine.

Das "zu überlagern" bezieht sich darauf, dass die primäre Warenfachfläche 14 des ersten Warenfachkammersegment 12 in die Nähe oder an die sekundäre Warenfachfläche 18 des zweiten Warenfachkammersegment 16 gebracht wird, sodass sich beide Flächen beispielsweise berühren können und die Flächennormalen sich überlagern, wie in Fig. 1 gezeigt ist. Das "zu überlagern" kann auch als in Deckung bringen bezeichnet werden.

Der Begriff "ausgeklappter Zustand" bezieht sich auf eine entfaltete Konfiguration des ersten Warenfachkammersegmentes im Bezug auf das zweite Warenfachkammersegment 16 in dem die Oberflächennormalen der primären Warenfachfläche 14 und der sekundären Warenfachfläche 18 von einer nahezu entgegengesetzten, parallelen Ausrichtung in eine davon abweichende Stellung gebracht werden und beispielsweise einen Winkel miteinander einschließen, wie in Fig. 1 gezeigt ist.

In einem Beispiel können die Oberflächennormalen der primären Warenfachfläche 14 und der sekundären Warenfachfläche 18 einen Winkel von 90° einschließen.

In einem Beispiel können die Oberflächennormalen der primäre Warenfachfläche 14 und der sekundären Warenfachfläche 18 einen Winkel größer als 90° einschließen.

In einem Beispiel können die Oberflächennormalen der primären Warenfachfläche 14 und der sekundären Warenfachfläche 18 einen Winkel kleiner als 90° einschließen.

Der Begriff "kabineninnenraumexponierte Gesamtwarenfachfläche" bezieht sich auf eine Oberfläche, die durch eine Kombination der primären Warenfachfläche 14 und der sekundären Warenfachfläche 18 gebildet ist, wie in Fig. 1 gezeigt ist, und die eine ganzheitliche Erfassung oder Detektion der mindestens einen Warenfächer der ersten Warenfachkammersegmente und der zweiten Warenfachkammersegmente von einem Innenraum der Flugzeugkabine möglich macht. Der Innenraum der Flugzeugkabine ist dabei ein Kabinenraum der für Nutzung durch Passagiere und/oder Flugzeugpersonal vorgesehen ist.

In einem Beispiel wird durch den ausgeklappten Zustand 24b die durch Benutzer, beispielsweise Passagiere, nutzbare, bedienbare und erreichbare Oberfläche des Warenausgabegerätes 10 in Bezug auf den verstauten Zustand 24a vergrößert, wie in Fig. 1 gezeigt ist.

In einem Beispiel werden durch den ausgeklappten Zustand 24b Funktionen des Warenausgabegerätes 10 aktiviert, was nicht in Fig. 1 gezeigt ist.

In einem Beispiel umfassen die Funktionen beispielsweise eine Beleuchtung der Warenfächer, eine Aktivierung des Bezahlmechanismus oder des Warenverteilers.

Das mindestens zweite Warenfachkammersegment 16 kann auch als zweite Warenkammer oder Kammer bezeichnet werden.

In einem Beispiel von Fig. 1 ist die erste Verbindungsanordnung 20 ausgestaltet, um das mindestens zweite Warenfachkammersegment 16 im Bezug auf das erste Warenfachkammersegment 12 um eine erste gemeinsame Drehachse 28 zu bewegen. Die erste gemeinsame Drehachse 28 befindet sich an einer der primären und sekundären Warenfachflächen 14, 18.

Die erste Verbindungsanordnung 20 kann auch als erste Verbindungskinematik oder Kinematik bezeichnet werden.

In einem Beispiel ist die erste Verbindungsanordnung 20 als Gelenk oder Scharnier zwischen dem ersten Warenfachkammersegment und dem zweiten Warenfachkammersegment 16 ausgestaltet, um das erste Warenfachkammersegment 12 und zweite Warenfachkammersegment 16 aufeinander zu klappen, wie in Fig. 1 gezeigt ist.

In einem Beispiel ist die erste Verbindungsanordnung 20 als Klavierband bereitgestellt, was nicht in Fig. 1 gezeigt ist.

In einem Beispiel ist die erste Verbindungsanordnung 20 als flexibles Materialband bereitgestellt, was nicht in Fig. 1 gezeigt ist.

In einem Beispiel befindet sich die erste gemeinsame Drehachse 28 an einer jeweiligen Begrenzung der primären und sekundären Warenfachfläche 14, 18, wie in Fig. 1 gezeigt ist.

In einem Beispiel ist die erste Verbindungsanordnung 20 als flexibles Materialband aus dem Material der Warenfachkammersegmente bereitgestellt, was nicht in Fig. 1 gezeigt ist.

In einem Beispiel ist die erste Verbindungsanordnung 20 in Form von mehreren Gelenken oder Scharnieren bereitgestellt, die jeweils an den Kanten oder Ecken des erste Warenfachkammersegment 12 und des zweiten Warenfachkammersegments 16 befestigt sind, wobei sich die Kanten oder Ecken in der Nähe zur ersten gemeinsamen Drehachse 28 befinden.

In einem Beispiel befindet sich eine Schutzvorrichtung über der ersten Verbindungsanordnung 20, um ein unbeabsichtigtes Einklemmen von Personen oder Gegenständen zwischen den Warenfachkammersegmenten zu vermeiden, was nicht in Fig. 1 gezeigt ist.

In einem Beispiel befindet sich die Schutzvorrichtung über der ersten Verbindungsanordnung 20 und an den seitlichen Ecken oder Seitenkanten der Warenfachkammersegmenten in der Nähe der Verbindungsanordnung.

Der Begriff "erste gemeinsame Drehachse" bezieht sich auf eine lineare Achse, um die sich ein Körper oder ein System von Körpern rotiert.

In einem Beispiel erstreckt sich die erste gemeinsame Drehachse 28 vom Flugzeugkabinenboden, der nicht in Fig. 1 gezeigt ist, also von der Unterseite, der unteren Seitenfläche, des Warenausgabegerätes 10, welches auf dem Flugzeugkabinenboden steht, zur Flugzeugkabinendecke, also zur Oberseite, der oberen Seitenfläche, des Warenausgabegerätes 10. Die seitlichen Ecken oder Seitenkanten erstrecken sich ebenfalls von der Unterseite zur Oberseite des Warenausgabegerätes 10.

In einem Beispiel ist die erste Verbindungsanordnung 20 als Vielzahl von Scharnieren oder Gelenken bereitgestellt, die an den seitlichen Ecken oder Seitenkanten des ersten und zweiten Warenfachkammersegments 16 montiert sind.

In einem Beispiel erstreckt sich die erste gemeinsame Drehachse 28 durch die seitlichen Ecken oder Seitenkanten des ersten und zweiten Warenfachkammersegments 16.

In einem Beispiel ist das erste Warenfachkammersegment 12 starr befestigt und das zweite Warenfachkammersegment 16 dreht sich alleine um die erste gemeinsame Drehachse 28.

In einem Beispiel ist das zweite Warenfachkammersegment 16 starr befestigt und das erste Warenfachkammersegment 12 dreht sich alleine um die erste gemeinsame Drehachse 28.

In einem Beispiel drehen sich das zweite Warenfachkammersegment 16 das erste Warenfachkammersegment 12 um die erste gemeinsame Drehachse 28.

Als technischer Effekt, kann die erste Warenfachfläche an der zweiten Warenfachfläche im verstauten Zustand anliegen. Als ein Vorteil können das erste und zweite Warenfachkammersegment platzsparend zusammengeklappt werden und in ihrer weitesten Erstreckung der kabineninnenraumexponierten Gesamtwarenfachfläche in den Kabinenraum verkleinert werden.

Fig. 2 zeigt schematisch ein Beispiel eines Warenausgabegerätes 10 im ausgeklappten Zustand 24b. Das Warenausgabegerät umfasst ferner mindestens ein drittes Warenfachkammersegment 30 mit einer tertiären Warenfachfläche 32, aufweisend mindestens ein Warenfach 22c zum Lagern von Waren. Das mindestens dritte Warenfachkammersegment 30 und das erste Warenfachkammersegment 12 sind beweglich zueinander in einer zweiten Verbindungsanordnung 34 gelagert. Die zweite Verbindungsanordnung 34 ist ausgestaltet, um die tertiäre Warenfachfläche 32 mit der primären Warenfachfläche 14 und mit der sekundären Warenfachfläche 18 in einem verstauten Zustand 24a zu überlagern und in einem ausgeklapptem Zustand 24b die primäre Warenfachfläche 14 mittels der tertiären Warenfachfläche 32 zu der kabineninnenraumexponierten Gesamtwarenfachfläche 26 zusätzlich zu vergrößern.

Der Begriff "zusätzlich zu vergrößern" bezieht sich darauf, dass sich das erste, zweite und dritte Warenfachkammersegment 12, 16, 30 zu einer kabineninnenraumexponierten Gesamtwarenfachfläche 26 komplementieren.

In einem Beispiel können das erste, zweite und dritte Warenfachkammersegment 12, 16, 30 unterschiedliche Waren und/oder unterschiedliche Funktionen umfassen, was nicht in Fig. 2 gezeigt ist.

In einem Beispiel klappt das Warenausgabegerät erst in den ausgeklappten Zustand 24b, wenn das Warenausgabegerät das Signal des Bezahlungsmechanismus erhält was nicht in Fig. 2 gezeigt ist.

Das mindestens dritte Warenfachkammersegment 30 kann auch als dritte Warenfachkammer, Warenkammer oder Kammer bezeichnet werden.

Als ein Vorteil kann eine noch größere kabineninnenraumexponierte Gesamtwarenfachfläche geschaffen werden, die sich unter minimaler Raumnutzung in einen ausgeklappten Zustand bringen lässt.

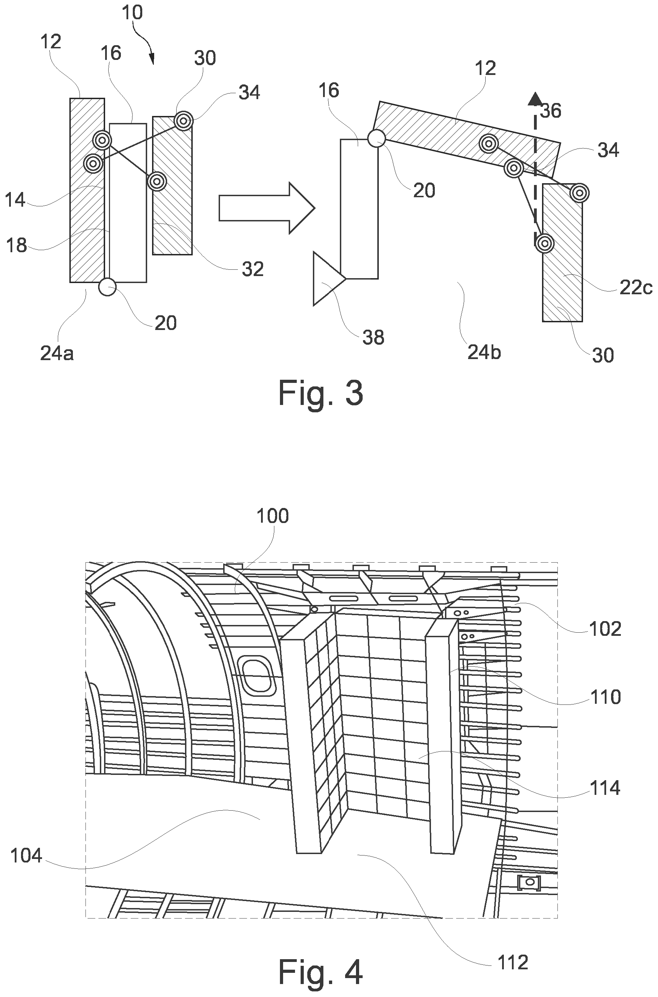

Fig. 3 zeigt schematisch in einer Draufsicht, senkrecht zur zweiten Drehachse 36, ein Beispiel eines Warenausgabegerätes 10 im verstauten 24a und ausgeklappten Zustand 24b, der jeweils links und rechts gezeigt ist. Die zweite Verbindungsanordnung 34 ist ausgestaltet, um das mindestens dritte Warenfachkammersegment 30 im Bezug auf das erste Warenfachkammersegment 12 um eine zweite gemeinsame Drehachse 36 zu bewegen. Die zweite gemeinsame Drehachse 36 ist beabstandet von einer der primären, sekundären und tertiären Warenfachflächen 14, 18, 32, um das zweite Warenfachkammersegment 16 zwischen dem erste Warenfachkammersegment 12 und dem dritten Warenfachkammersegment 30 im verstauten Zustand 24a einzufalten.

Die zweite Verbindungsanordnung 34 kann auch als zweite Verbindungskinematik oder zweite Kinematik bezeichnet werden.

Der Begriff "zweite gemeinsame Drehachse" bezieht sich auf eine lineare Rotationsachse des ersten 12 zum dritten Warenkammersegment 30.

In einem Beispiel verläuft die zweite gemeinsame Drehachse 36 von der Unterseite des Warenausgabegerätes 10 zur Oberseite des Warenausgabegerätes 10, das heißt vom Flugzeugkabinenboden zur Flugzeugkabinendecke, die in Fig. 3 nicht gezeigt sind.

In einem Beispiel ist das zweite Warenfachkammersegment 16 zwischen dem ersten 12 und mindestens drittem Warenfachkammersegment 30 in Deckung bringbar, wie in Fig.3 gezeigt.

In einem Beispiel ist die zweite gemeinsame Drehachse 36 beabstandet von einer Begrenzung der primären, sekundären und tertiären Warenfachflächen 14, 18, 32, wie in Fig.3 gezeigt.

In einem Beispiel ist die Begrenzung eine seitliche Kante, Seitenkante, seitliche Ecke oder Seite der Warenfachkammersegmente.

In einem Beispiel berührt im verstauten Zustand 24a die primäre Warenfachfläche 14 die sekundäre Warenfachfläche 18 und die tertiäre Warenfachfläche 32 die gegenüberliegende Warenfachfläche, beispielsweise die gegenüberliegende, rückseitige und kabineninnenraumabgewandten Fläche der sekundären Warenfachfläche 18 am zweiten Warenfachkammersegment.

In einem Beispiel besitzen das erste, zweite und dritte Warenfachkammersegment 12, 16, 30 jeweils eine zugeordnete primäre, sekundäre und tertiäre Warenfachfläche 14, 18, 32 mit jeweils einer dieser zugeordneten gegenüberliegenden, rückseitigen und kabineninnenraumabgewandten Fläche, wie in Fig.3 gezeigt.

In einem Beispiel umfassen die erste und die zweite Verbindungsanordnung 20, 34 Scharniergelenke, ein Scherengelenk oder 4-Gelenk Getriebe, oder Gelenkviereck.

In einem Beispiel umfasst die zweite Verbindungsanordnung 34 ein 4-Gelenk Getriebe, wie in Fig.3 gezeigt.

In einem Beispiel ist das zweite Warenfachkammersegment 16 zwischen dem ersten 12 und dritten Warenfachkammersegment 30 in Deckung bringbar.

In einem Beispiel ist das 4-Gelenk Getriebe an Gelenkpunkten am ersten 12 und dritten Warenfachkammersegment 30 mittels seiner zwei Gelenkarme angebracht, wie in Fig.3 gezeigt. Die Gelenkarme sind so angeordnet, dass sie sich in einem Kreuzungspunkt zwischen erstem 12 und drittem Warenfachsegment 30 überschneiden. Die Gelenkpunkte sind innerhalb eines Bereichs der unteren und oberen Seitenfläche der ersten 12 und dritten Warenfachkammersegmente 30 angebracht, so dass die zweite gemeinsame Drehachse 36 oberhalb der primären und tertiären Warenfachflächen 14, 32 in Richtung ihrer Oberflächennormalen liegt aber von den Projektionen der Seitenkanten und seitlichen Ecken der primären und tertiären Warenfachflächen 14, 32 in Richtung ihrer Oberflächennormalen umschrieben ist. Durch die Platzierung der zweiten gemeinsamen Drehachse 36 in einem Abstand zwischen der primären und tertiären Warenfachfläche 14, 32 entsteht ein Zwischenraum. In dem Zwischenraum kann das zweite Warenfachkammersegment 16 durch Einklappen verstaut werden.

Als ein Effekt kann dadurch das zweite Warenfachkammersegment 16 in einen Zwischenraum zwischen dem ersten und dritten Warenfachkammersegment eingeklappt werden. Als ein weiterer Vorteil ist dadurch ein platzsparenderes Warenausgabegerät mit einer noch größeren Anzahl an Warenfächern bereitgestellt. Als ein weiterer Vorteil ist dadurch ein platzsparenderes Warenausgabegerät mit einer noch größeren Gesamtwarenfachfläche bereitgestellt. Als ein weiterer Vorteil kann eine noch größeren Gesamtwarenfachfläche bereitgestellt werden durch eine möglichst platzsparende Aufklappbewegung des ersten, zweiten und dritten Warenfachkammersegmentes.

In einem Beispiel von Fig. 3 umfasst das Warenausgabegerät ferner eine Arretierungsanordnung 38 zum Fixieren einer Orientierung mindestens des zweiten Warenfachkammersegments 16 relativ zum ersten Warenfachkammersegment 12 im verstauten 24a oder ausgeklappten Zustand 24b.

Die Arretierungsanordnung 38 kann auch als Fixierungsanordnung oder Haltevorrichtung bezeichnet werden.

Der Begriff "Arretierungsanordnung" bezieht sich auf eine Vorrichtung, die reversibel das erste, zweite und dritte Warenfachkammersegment 12, 16, 30 gegen ein unbeabsichtigtes Zusammenklappen sichert.

In einem Beispiel ist die Arretierungsanordnung 38 durch Sicherheitselemente in den ersten und zweiten Verbindungsanordnungen 20, 34 bereitgestellt, die eine Bewegung dieser Verbindungsanordnungen 20, 34 in den ausgeklappten oder verstauten Zustand 24a blockieren, was in Fig. 3 nicht gezeigt ist.

In einem Beispiel ist die Arretierungsanordnung 38 durch zusätzliche Halterungselemente zwischen den ersten, zweiten und dritten Warenfachkammersegmenten 12, 16, 30 bereitgestellt, die eine Position der Warenfachkammersegmente untereinander fixieren, was in Fig. 3 nicht gezeigt ist.

In einem Beispiel ist die Arretierungsanordnung 38 durch zusätzliche Halterungselemente bereitgestellt, die an der Flugzeugkabinendecke und/oder am Flugzeugkabinenboden oder an den Flugzeugkabinenwänden befestigt sind und das erste, zweite und dritte Warenfachkammersegment 12, 16, 30 im zusammengeklappten oder verstauten Zustand 24a sichern, was in Fig. 3 nicht gezeigt ist.

In einem Beispiel umfasst die Arretierungsanordnung 38 komplementäre Ösen und Haken, Aufnahmen und Greifarme, Einrastbolzen und Bolzenaufnahmen oder ähnliche männliche und weibliche Befestigungselemente, was in Fig. 3 nicht gezeigt ist.

In einem Beispiel ist die Arretierungsanordnung 38 an der Primärstruktur des Flugzeuges, beispielsweise an Spanten, Stringern, Planken, Querstreben, Querbalken befestigt, was in Fig. 3 nicht gezeigt ist.

Der Begriff "Orientierung" bezieht sich auf die Ortskoordinaten und die Ausrichtung der Flächennormalen der ersten, zweiten und dritten Warenfachkammersegmente 12, 16, 30 in einem kartesischen Koordinatensystem.

In einem Beispiel ist eine Arretierungsanordnung 38 zum Feststellen einer Orientierung des mindestens dritten 30 und des zweiten Warenfachkammersegments 16 relativ zum ersten Warenfachkammersegment 12 bereitgestellt. Als ein Vorteil ist ein sicheres Warenausgabegerät bereitgestellt. Als ein weiterer Vorteil ist ein starreres und robusteres Warenausgabegerät bereitgestellt. Als ein weiterer Vorteil ist ein starreres und robusteres ausklappbares Warenausgabegerät bereitgestellt.

In einem Beispiel, das in Fig. 3 nicht gezeigt ist, ist die Arretierungsanordnung 38 ausgestaltet, um mindestens das zweite Warenfachkammersegment 16 relativ zum ersten Warenfachkammersegment 12 und einem Kabinenboden anzuheben, um das zweite Warenfachkammersegment 16 um die erste gemeinsame Drehachse 28 zu bewegen. Die Arretierungsanordnung 38 ist ferner ausgestaltet, um das zweite Warenfachkammersegment 16 relativ zum ersten Warenfachkammersegment 12 abzusenken, um das zweite Warenfachkammersegment 16 im ausgeklappten Zustand 24b am Kabinenboden zu fixieren.

Das "anzuheben" bezieht sich auf eine Bewegungsrichtung von der unteren Seite des Warenausgabegerätes 10 zur oberen Seite des 'Warenausgabegerätes 10, also entgegen dem Flugzeugkabinenboden auf dem das Warenausgabegerät platziert ist und entgegen einer Hauptrichtung der Gravitation, beziehungsweise der Erdbeschleunigung, die auf das Warenausgabegerät wirkt.

In einem Beispiel ist die Arretierungsanordnung 38 mit einem Mechanismus versehen, der dem einer Balkonschiebetür ähnelt, was in Fig. 3 nicht gezeigt ist. In einem verstauten Zustand 24a wird dabei der Mechanismus betätigt, sodass das zweite Warenfachkammersegment 16, welches auf dem Flugzeugkabinenboden fixiert aufliegt relativ zum ersten Warenfachkammersegment 12 und der Flugzeugkabinendecke als auch dem Flugzeugkabinenboden angehoben wird. Das heißt das zweite Warenfachkammersegment 16 wird in Richtung Flugzeugkabinendecke angehoben und schwebt über dem Flugzeugkabinenboden. In diesem Zustand ist das zweite Warenfachkammersegment 16 beweglich zum ersten Warenfachkammersegment 12, sodass es ausgeklappt werden kann. Ist das zweite Warenfachkammersegment 16 voll ausgeklappt, sodass die kabineninnenraumexponierten Gesamtwarenfachfläche 26 gebildet ist, wird der Mechanismus an der Arretierungsanordnung 38 zum Absenken des zweiten Warenfachkammersegment 16 betätigt. Das abgesenkte zweite Warenfachkammersegment 16 wird durch die Gravitation am Flugzeugkabinenboden gehalten. Zum Verstauen wird der gleiche Mechanismus wieder aktiviert. Das gleiche Prinzip lässt sich auch auf das dritte Warenkammersegment 30 anwenden.

In einem Beispiel ist zusätzlich vorgesehen, dass die Arretierungsanordnung 38 ausgestaltet ist, um mindestens das dritte Warenfachkammersegment 30 relativ zum ersten Warenfachkammersegment 12 und einem Kabinenboden anzuheben, um das dritte Warenfachkammersegment 30 um die zweite gemeinsame Drehachse 36 zu bewegen. Die Arretierungsanordnung 38 ist ferner ausgestaltet, um das dritte Warenfachkammersegment 30 relativ zum ersten Warenfachkammersegment 12 abzusenken, um das dritte Warenfachkammersegmente im ausgeklappten Zustand 24b am Kabinenboden zu fixieren.

Als Vorteil ist ein einfacher und platzsparender Sicherungsmechanismus für das Warenausgabegerät bereitgestellt.

In einem Beispiel, das in Fig. 3 nicht gezeigt ist, umfasst eines der ersten, zweiten und mindestens dritten Warenfachkammersegmente 12, 16, 30 eine Trennwand.

Die Trennwand kann auch als Raumteiler bezeichnet werden.

Der Begriff "Trennwand" bezieht sich auf eine Wand die als Kabinenteiler in der Flugzeugkabine montiert ist und die tragende Funktion haben kann.

In einem Beispiel ist die Trennwand so gestaltet, dass sie an einem Notausgangsbereichsareal, Vorderausgangsbereichsareal oder Hinterausgangsbereichsareal platzierbar ist.

In einem Beispiel ist die Trennwand als Teil eines Galleyelements ausgestaltet oder einer Toilettenkabine.

In einem Beispiel umfasst das erste Warenfachkammersegment 12 die Trennwand und das zweite und dritte Warenfachkammersegmente 16, 30 werden zu beiden Seiten der Trennwand weggeklappt.

In einem Beispiel umfasst das zweite Warenfachkammersegment 16 die Trennwand und das erste 12 und dritte Warenfachkammersegment 30 umschließen die Trennwand und entklappen von einer Rückseite zur Vorderseite der Trennwand.

In einem Beispiel umfasst das dritte Warenfachkammersegment 30 die Trennwand und das erste und zweite Warenfachkammersegment 16 werden vor der Trennwand entklappt.

Als Vorteil ist eine Kombination des Warenausgabegerätes 10 mit einer gewöhnlichen Flugzeugtrennwand möglich. Als Vorteil ist eine platzsparende Anbringung an bereits vorhandene Trennwände möglich.

Fig. 4 zeigt schematisch ein Beispiel einer Flugzeugkabine 100. Die Flugzeugkabine 100 weist einen Kabinenraum 102, Ausgangsbereichsareale 104, die als mindestens eines von Notausgangsbereichsarealen, Vorderausgangsbereichsarealen und Hinterausgangsbereichsarealen ausgestaltet sind und mindestens ein Warenausgabegerät 110 gemäß einem der vorhergehenden Beispiele auf. Die Ausgangsbereichsareale 104 sind zum Betreten und Verlassen des Kabinenraums 102 angeordnet. Das Warenausgabegerät 110 ist an mindestens einem der Ausgangsbereichsareale 104 im verstauten Zustand 24a angeordnet. Das Warenausgabegerät 110 ragt im ausgeklappten Zustand 112 mit einer kabineninnenraumexponierten Gesamtwarenfachfläche 114 in ein Ausgangsbereichsareal hinein.

Der Begriff "Ausgangsbereichsareale" bezieht sich auf Gehwege, die durch Passagiere oder Flugpersonal genutzt werden, um die Flugzeugkabine 100 im Inneren des Flugzeugrumpfes zu betreten oder zu verlassen.

In einem Beispiel ist das Warenausgabegerät 110 im verstauten Zustand 24a an einem der genannten Ausgangsbereichsareale 104 angeordnet, sodass es nicht in diese Ausgangsbereichsareale 104 hineinragt oder von ihrem Volumen umfasst ist. Somit blockiert das Warenausgabegerät 110 im verstauten Zustand 24a nicht die Ausgangsbereichsareale 104 und ihre Nutzung durch Passagiere oder Flugpersonal. Werden die Ausgangsbereichsareale 104 nicht durch Passagiere oder Flugpersonal genutzt, weil die Flugzeugkabine 100 im Flugbetrieb ist, kann der somit ungenutzte Platz der Ausgangsbereichsareale 104 temporär zum Ausklappen des Warenausgabegerätes 110 genutzt werden und das Volumen der ersten, zweiten und dritten Warenfachsegmente 12, 16, 30 ragt in die Ausgangsbereichsareale 104. Die kabineninnenraumexponierte Gesamtwarenfachfläche 114 ragt dann in ihrer längsten Ausdehnung in die Ausgangsbereichsareale 104. Das Warenausgabegerät 110 im ausgeklappten Zustand 112 kann dann durch Verstauen wieder aus dem Volumen der Ausgangsbereichsareale 104 entfernt werden.

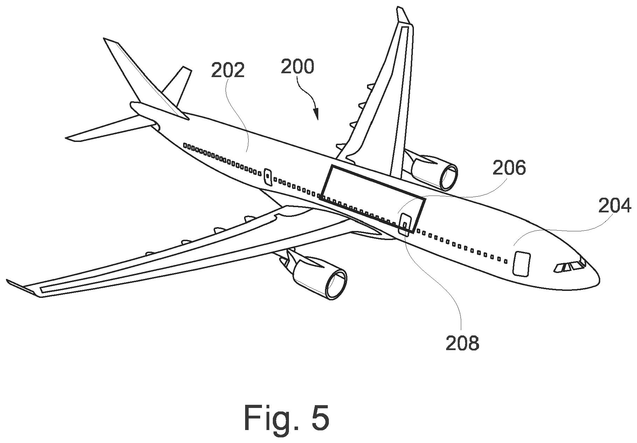

Fig. 5 zeigt schematisch ein Beispiel eines Flugzeugs. Das Flugzeug 200 weist eine Rumpfstruktur 202 mit Ausgangsöffnungen 204 und eine Flugzeugkabine 206 gemäß dem vorherigen Beispiel auf. Die Rumpfstruktur 202 umfasst die Flugzeugkabine 206 und die Ausgangsöffnungen 204 befinden sich an Ausgangsbereichsarealen 208 der Flugzeugkabine.

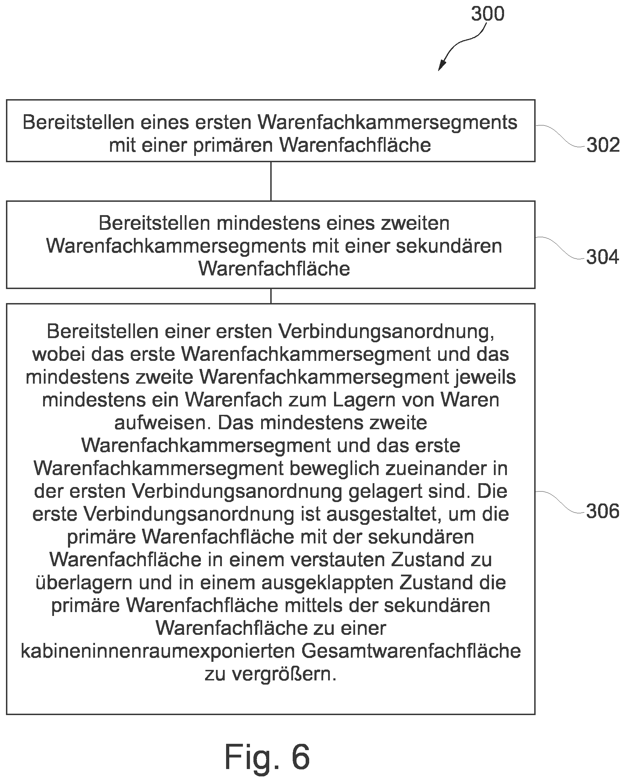

Fig. 6 zeigt grundlegende Schritte eines Beispiels eines Verfahrens zum Bereitstellen des Warenausgabegerätes für eine Flugzeugkabine.

Das Verfahren umfasst die folgenden Schritte:
a) In einem ersten Schritt 302 wird ein erstes Warenfachkammersegments mit einer primären Warenfachfläche bereitgestellt.
b) In einem zweiten Schritt 304 wird mindestens ein zweites Warenfachkammersegment mit einer sekundären Warenfachfläche bereitgestellt.
c) In einem dritten Schritt 306 wird eine erste Verbindungsanordnung bereitgestellt, wobei das erste Warenfachkammersegment und das mindestens zweite Warenfachkammersegment jeweils mindestens ein Warenfach zum Lagern von Waren aufweisen, wobei das mindestens zweite Warenfachkammersegment und das erste Warenfachkammersegment beweglich zueinander in der ersten Verbindungsanordnung gelagert sind und wobei die erste Verbindungsanordnung ausgestaltet ist, um die primäre Warenfachfläche mit der sekundären Warenfachfläche in einem verstauten Zustand zu überlagern und in einem ausgeklappten Zustand die primäre Warenfachfläche mittels der sekundären Warenfachfläche zu einer kabineninnenraumexponierten Gesamtwarenfachfläche zu vergrößern.

In einem Beispiel ist ein Verfahren bereitgestellt, welches ein Anbringen des Warenausgabegerätes an bereits vorhandene Trennwände einer Flugzeugkabine vorsieht.

Die oberhalb beschriebenen Ausführungsbeispiele können in unterschiedlicher Art und Weise kombiniert werden. Insbesondere können auch Aspekte der Vorrichtungen für die Ausführungsformen des Verfahrens verwendet werden und umgekehrt.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Warenausgabegerät (10) für eine Flugzeugkabine, aufweisend:
- ein erstes Warenfachkammersegment (12) mit einer primären Warenfachfläche (14);
- mindestens ein zweites Warenfachkammersegment (16) mit einer sekundären Warenfachfläche (18);
- eine erste Verbindungsanordnung (20);
wobei das erste Warenfachkammersegment und das mindestens zweite Warenfachkammersegment jeweils mindestens ein Warenfach (22a, 22b) zum Lagern von Waren aufweisen;
wobei das mindestens zweite Warenfachkammersegment und das erste Warenfachkammersegment beweglich zueinander in der ersten Verbindungsanordnung gelagert sind; und
wobei die erste Verbindungsanordnung ausgestaltet ist, um die primäre Warenfachfläche mit der sekundären Warenfachfläche in einem verstauten Zustand (24a) zu überlagern und in einem ausgeklappten Zustand (24b) die primäre Warenfachfläche mittels der sekundären Warenfachfläche zu einer kabineninnenraumexponierten Gesamtwarenfachfläche (26) zu vergrößern.

2. Warenausgabegerät gemäß Anspruch 1, wobei die erste Verbindungsanordnung ausgestaltet ist, um das mindestens zweite Warenfachkammersegment im Bezug auf das erste Warenfachkammersegment um eine erste gemeinsame Drehachse (28) zu bewegen; und
wobei sich die erste gemeinsame Drehachse an einer der primären und sekundären Warenfachflächen befindet.

3. Warenausgabegerät gemäß Anspruch 1 oder 2, ferner umfassend mindestens ein drittes Warenfachkammersegment (30) mit einer tertiären Warenfachfläche (32), aufweisend mindestens ein Warenfach (22c) zum Lagern von Waren;
wobei das mindestens dritte Warenfachkammersegment und das erste Warenfachkammersegment beweglich zueinander in einer zweiten Verbindungsanordnung (34) gelagert sind; und
wobei die zweite Verbindungsanordnung ausgestaltet ist, um die tertiäre Warenfachfläche mit der primären Warenfachfläche und mit der sekundären Warenfachfläche in einem verstauten Zustand zu überlagern und in einem ausgeklapptem Zustand die primäre Warenfachfläche mittels der tertiären Warenfachfläche zu der kabineninnenraumexponierten Gesamtwarenfachfläche zusätzlich zu vergrößern.

4. Warenausgabegerät gemäß Anspruch 3, wobei die zweite Verbindungsanordnung ausgestaltet ist, um das mindestens dritte Warenfachkammersegment im Bezug auf das erste Warenfachkammersegment um eine zweite gemeinsame Drehachse (36) zu bewegen; und
wobei die zweite gemeinsame Drehachse beabstandet von einer der primären, sekundären und tertiären Warenfachflächen ist, um das zweite Warenfachkammersegment zwischen dem ersten Warenfachkammersegment und dem dritten Warenfachkammersegment im verstauten Zustand einzufalten.

5. Warenausgabegerät gemäß einem der vorhergehenden Ansprüche, ferner umfassend eine Arretierungsanordnung (38) zum Fixieren einer Orientierung mindestens des zweiten Warenfachkammersegments relativ zum ersten Warenfachkammersegment im verstauten oder ausgeklappten Zustand.

6. Warenausgabegerät gemäß Anspruch 5, wobei die Arretierungsanordnung ausgestaltet ist, um mindestens das zweite Warenfachkammersegment relativ zum ersten Warenfachkammersegment und einem Kabinenboden anzuheben, um das zweite Warenfachkammersegment um die erste gemeinsame Drehachse zu bewegen; und
wobei die Arretierungsanordnung ferner ausgestaltet ist, um das zweite Warenfachkammersegment relativ zum ersten Warenfachkammersegment abzusenken, um das zweite Warenfachkammersegment im ausgeklappten Zustand am Kabinenboden zu fixieren.

7. Warenausgabegerät gemäß einem der vorhergehenden Ansprüche, wobei eines der ersten, zweiten und mindestens dritten Warenfachkammersegmente eine Trennwand umfasst.

8. Eine Flugzeugkabine (100), aufweisend:
- einen Kabinenraum (102),
- Ausgangsbereichsareale (104), die als mindestens eines von Notausgangsbereichsarealen, Vorderausgangsbereichsarealen, Hinterausgangsbereichsarealen ausgestaltet sind; und
- mindestens ein Warenausgabegerät (110) gemäß einem der vorhergehenden Ansprüche 1 bis 7;
wobei die Ausgangsbereichsareale zum Betreten und Verlassen des Kabinenraums angeordnet sind;
wobei das Warenausgabegerät an mindestens einem der Ausgangsbereichsareale im verstauten Zustand angeordnet ist; und
wobei das Warenausgabegerät im ausgeklappten Zustand (112) mit einer kabineninnenraumexponierten Gesamtwarenfachfläche (114) in ein Ausgangsbereichsareal hineinragt.

9. Ein Flugzeug (200), aufweisend:
- eine Rumpfstruktur (202) mit Ausgangsöffnungen (204); und
- eine Flugzeugkabine (206) gemäß Anspruch 8,
wobei die Rumpfstruktur die Flugzeugkabine umfasst und sich die Ausgangsöffnungen an Ausgangsbereichsarealen (208) der Flugzeugkabine befinden.

10. Ein Verfahren (300) zum Bereitstellen eines Warenausgabegerätes für eine Flugzeugkabine, das die folgenden Schritte aufweist:
a) Bereitstellen (302) eines ersten Warenfachkammersegments mit einer primären Warenfachfläche;
b) Bereitstellen (304) mindestens eines zweiten Warenfachkammersegments mit einer sekundären Warenfachfläche;
c) Bereitstellen (306) einer ersten Verbindungsanordnung, wobei das erste Warenfachkammersegment und das mindestens zweite Warenfachkammersegment jeweils mindestens ein Warenfach zum Lagern von Waren aufweisen, wobei das mindestens zweite Warenfachkammersegment und das erste Warenfachkammersegment beweglich zueinander in der ersten Verbindungsanordnung gelagert sind und wobei die erste Verbindungsanordnung ausgestaltet ist, um die primäre Warenfachfläche mit der sekundären Warenfachfläche in einem verstauten Zustand zu überlagern und in einem ausgeklappten Zustand die primäre Warenfachfläche mittels der sekundären Warenfachfläche zu einer kabineninnenraumexponierten Gesamtwarenfachfläche zu vergrößern.
